# EUROPEAN PATENT APPLICATION

(11) **EP 4 723 249 A1**
(43) Date of publication of application: **08.04.2026**
(21) Application number: 24852393.8
(22) Date of filing: 09.08.2024
(51) Int. Cl.: H01M 4/66, H01M 10/052

(54) **LITHIUM SECONDARY BATTERY, AND BATTERY MODULE AND BATTERY PACK INCLUDING SAME**

(30) Priority: 10.08.2023 KR 20230105153
(71) Applicant: LG Energy Solution, Ltd., Seoul 07335 (KR)
(72) Inventor: KANG, Gyung Soo, Daejeon 34122 (KR); JEONG, Yeon Beom, Daejeon 34122 (KR); LEE, Hyo Seo, Daejeon 34122 (KR)
(74) Representative: Hoffmann Eitle
(86) International application number: PCT/KR2024/011856
(87) International publication number: WO 2025/034040

(57) **Abstract**

A lithium secondary battery according to the present invention includes: an electrode assembly having a structure in which a plurality of electrodes and a plurality of separators are alternately stacked; and a battery case for receiving the electrode assembly, wherein the electrodes include an electrode current collector and an electrode active material layer disposed on the electrode current collector, and at least one of the plurality of electrode current collectors includes a glass layer, a first metal layer disposed on one surface of the glass layer, and a second metal layer disposed on the other surface of the glass layer.

## Description

### TECHNICAL FIELD

This application claims the benefit of priority from Korean Patent Application No. 10-2023-0105153, filed on August 10, 2023, in the Korean Intellectual Property Office, the disclosure of which is incorporated herein in its entirety by reference.

The present invention relates to a lithium secondary battery, and a battery module and a battery pack which include the lithium secondary battery.

### BACKGROUND ART

As the technology development and demand for electric vehicles and energy storage systems (ESS) have increased, the demand for secondary batteries as an energy source has been rapidly increased, and accordingly, studies have been conducted on batteries which may meet various needs.

Particularly, in order to use a battery for a longer period of time with a single battery charge, the battery is required to have a high capacity, and in order to implement a high-capacity battery, technology for implementing a large-area battery is required. However, in the process of implementing the large-area electrode, the performance of the electrode may be reduced, and in the event of a fire, there is a concern about thermal propagation by thermal runaway to other electrodes.

In a lithium secondary battery, the temperature of an electrode may rapidly rise due to a thermal factor and a physical factor. The thermal factor may be overcharging or overloading due to misuse or malfunction of a charger, etc., and the physical factor may be damage to a separator by an extremal impact, etc., which causes a negative electrode and a positive electrode to come into contact with each other, resulting in an internal short circuit, and these factors may cause a phenomenon in which the temperature of an electrode rises rapidly. If the temperature of an electrode rises rapidly as described above, a battery becomes very unstable due to a reaction between an electrolyte solution and lithium or generation of hydrogen, oxygen, or the like inside the battery, and a solvent of the electrolyte decomposes, resulting in producing a gas, and the decomposition gas of the solvent ignites, which may lead to explosion of the battery.

A typical lithium secondary battery includes only a single metal layer as an electrode current collector, and specifically, uses an aluminum single metal layer as a positive electrode current collector, and a copper single metal layer as a negative electrode current collector. However, such a single metal layer has very high electrical conductivity and very high thermal conductivity, so that the time taken to reach a high temperature instantaneously in an abnormal behavior of the battery is very short, and there is a concern about thermal propagation due to thermal runaway.

Accordingly, there is a need to supplement mechanical safety in the event of an abnormal behavior such as thermal runaway or severe physical deformation in a lithium secondary battery, and safety against thermal propagation.

### DISCLOSURE OF THE INVENTION

### TECHNICAL PROBLEM

An object of the present invention is to provide a lithium secondary battery having excellent safety, heat resistance, and a heat shielding effect against a fire, and a battery module and a battery pack, which include the lithium secondary battery.

### TECHNICAL SOLUTION

In an aspect, the present invention provides a lithium secondary including an electrode assembly having a structure in which a plurality of electrodes and a plurality of separators are alternately stacked, and a battery case for accommodating the electrode assembly, wherein the electrode includes an electrode current collector and an electrode active material layer disposed on the electrode current collector, and at least one of the plurality of electrode current collectors is an electrode current collector including a glass layer, a first metal layer disposed on one surface of the glass layer, and a second metal layer disposed on the other surface of the glass layer.

The glass layer may have a thickness of 200 µm or less.

The first metal layer and the second metal layer may each independently have a thickness of 0.2 µm to 5.0 µm.

The thickness ratio of the first metal layer or the second metal layer to the glass layer may be 1 : 20 to 1 : 1000.

The first metal layer and the second metal layer may each independently include one or more selected from the group consisting of copper, aluminum, stainless steel, and nickel.

An electrode including the electrode current collector having the glass layer may be disposed at the outermost periphery of the electrode assembly.

In another aspect, the present invention provides a battery module including the above-described lithium secondary battery in plurality, and a battery pack including the battery module in plurality.

### ADVANTAGEOUS EFFECTS

A lithium secondary battery according to the present invention includes an electrode current collector having a glass layer between two metal layers, so that in the event of an abnormal behavior such as thermal runaway or in the event of severe physical deformation, the glass layer is crushed, thereby damaging the metal layers, which may induce an electrical short between electrodes.

In addition, the glass layer has a density of 2.4 g/cm³ to 2.9 g/cm³, which is similar to that of an aluminum metal but smaller than that of a copper metal (density of 8.96 g/cm³), and thus, if applied to a negative electrode in particular, the glass layer has a weight similar to that of an electrode current collector made of only a metal, so that it is possible to improve mechanical safety while maintaining an energy density per weight, and also to improve safety against thermal propagation in the event of an actual fire.

In addition, if a battery module and a battery pack according to the present invention include the above-described electrode current collector in plurality, safety against thermal propagation may be maximized in the event of an actual fire, so that it is possible to implement a battery with a high capacity and a large area.

### BRIEF DESCRIPTION OF THE DRAWINGS

FIG. 1 is a cross-sectional view showing an electrode current collector according to an embodiment of the present invention; and
FIGS. 2 to 3 are cross-sectional views showing a lithium secondary battery according to an embodiment of the present invention.

### MDOE FOR CARRYING OUT THE INVENTION

Advantages and features of the present invention, and implementation methods thereof will be clarified through following embodiments described with reference to the accompanying drawings. The present invention may, however, be embodied in different forms and should not be construed as limited to the embodiments set forth herein. Rather, these embodiments are provided so that this disclosure will be thorough and complete, and will fully convey the scope of the present invention to those skilled in the art. Further, the present invention is only defined by scopes of claims. Like reference numerals refer to like elements throughout the specification.

Unless otherwise defined, all the terms used herein (including technical and scientific terms) will be used in a sense that can be commonly understood to those of ordinary skill in the art to which the inventive concept pertains. In addition, the terms that are defined in a commonly used dictionary are not interpreted ideally or excessively unless specifically defined.

The terms used herein are for the purpose of describing embodiments and are not intended to be limiting of the present invention. In the present specification, singular forms include plural forms unless the context clearly indicates otherwise. As used herein, the terms "comprises" and/or "comprising" are intended to be inclusive of the stated elements, and do not exclude the possibility of the presence or the addition of one or more other elements.

In the present specification, when a portion is said to include a certain element, it means that the portion may further include another element rather than excluding another element unless otherwise stated.

In the present specification, the description of "A and/or B" means A, or B, or A and B.

In the present specification, "%" means wt% unless otherwise noted.

### Lithium secondary battery

A lithium secondary battery according to the present invention includes an electrode assembly having a structure in which a plurality of electrodes and a plurality of separators are alternately stacked, and a battery case for accommodating the electrode assembly, wherein the electrode includes an electrode current collector and an electrode active material layer disposed on the electrode current collector, and at least one of the plurality of electrode current collectors is an electrode current collector including a glass layer, a first metal layer disposed on one surface of the glass layer, and a second metal layer disposed on the other surface of the glass layer.

Hereinafter, the electrode current collector including the glass layer, the electrode, the separator, an electrolyte, and the battery case will be described in that order.

### (1) Electrode current collector

A typical lithium secondary battery includes only a single metal layer as an electrode current collector, and specifically, uses an aluminum single metal layer as a positive electrode current collector, and a copper single metal layer as a negative electrode current collector. However, such a single metal layer has very high electrical conductivity and very high thermal conductivity, so that the time taken to reach a high temperature instantaneously in an abnormal behavior of the battery is very short, and there is a concern about thermal propagation due to thermal runaway.

Accordingly, there is a need to supplement mechanical safety and safety against thermal propagation in the event of an abnormal behavior such as thermal runaway or severe physical deformation in a lithium secondary battery.

Accordingly, the present inventors have devised an electrode current collector including a glass layer, and a first metal layer and a second metal layer respectively disposed on both sides of the glass layer, and have confirmed that there is an effect of inducing an electrical short circuit between electrodes by causing damage to the metal layers when the glass layer is crushed in the event of an abnormal behavior such as thermal runaway in a battery or in the event of severe physical deformation. That is, the lithium secondary battery according to the present invention may improve mechanical safety, and safety against thermal propagation in the event of an actual fire.

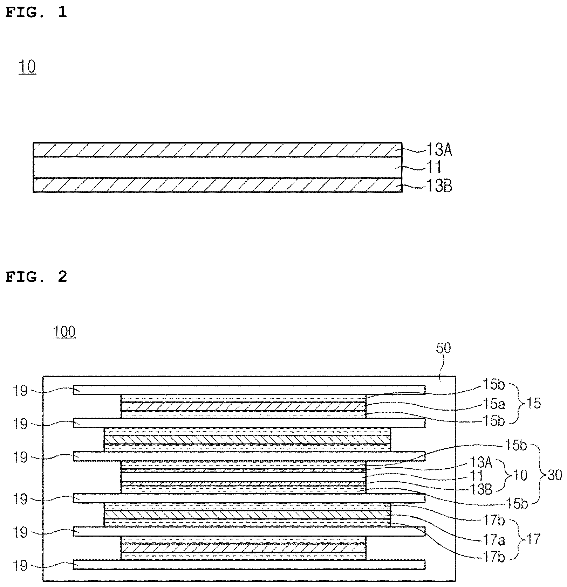

FIG. 1 is a cross-sectional view showing an electrode current collector according to an embodiment of the present invention.

Referring to FIG. 1, an electrode current collector 10 according to an embodiment of the present invention includes a glass layer 11, a first metal layer 13A disposed on one surface of the glass layer 11, and a second metal layer 13B disposed on the other surface of the glass layer.

### (1-1) Glass Layer 11

The glass layer 11 is an amorphous solid, and has characteristics of being transparent, smooth, and brittle. A main component of glass is silicon dioxide (SiO₂), and quartz or silica is used, both of which are minerals composed of almost pure SiO₂.

The electrode current collector according to the present invention includes the glass layer 11 between metal layers, so that in the event of an abnormal behavior such as thermal runaway or in the event of severe physical deformation, the glass layer is crushed, thereby damaging the metal layers, which may induce an electrical short between electrodes to improve safety against thermal propagation in the event of an actual fire.

The glass layer 11 may have a thickness of 200 µm or less, preferably 50 µm to 200 µm, and more preferably 50 µm to 100 µm. If the thickness of the glass layer 11 is greater than 200 µm, the thickness of a cell dramatically increases, thereby increasing resistance, and an energy density may be adversely affected. If the thickness of the glass layer 11 satisfies the above-described numerical ranges, the thickness of the glass layer may be minimized, and the glass layer broken during an abnormal behavior of a battery affects an electrode to significantly improve battery safety due to electrical short-circuit.

### (1-2) Metal layers (13A, 13B)

The first metal layer 13A and/or the second metal layer 13B may include one or more selected from the group consisting of copper, aluminum, stainless steel, or nickel. Although not specifically limited, if a positive electrode current collector is formed, it is preferable that the positive electrode current collector includes aluminum, and if a negative electrode current collector is formed, it is preferable that the negative electrode current collector includes copper. Also, the first metal layer 13A and/or the second metal layer 13B may have microscopic irregularities formed on the surface thereof to reinforce binding force to an electrode mixture layer, and may be used in various forms of such as a film, a sheet, a foil, a net, a porous body, a foam body, and a non-woven body.

The first metal layer 13A and/or the second metal layer 13B may have a thickness of 0.2 µm to 5.0 µm, preferably 0.5 µm to 2.0 µm, and more preferably 0.5 µm to 1.0 µm. If the thickness of the first metal layer 13A and/or the second metal layer 13B is less than 0.2 µm, the first metal layer 13A and/or the second metal layer 13B are too thin to serve as a support, so that it is difficult to maintain the shape of an electrode, and it is difficult to control physical properties of the electrode. On the other hand, if the thickness thereof is greater than 5.0 µm, the resistance of an electrode increases and the thickness and weight of a cell are excessively increased, so that an energy density may decrease.

The thickness ratio of the first metal layer 13A to the glass layer 11 may be 1 : 20 to 1 : 1000, and the thickness ratio of the second metal layer 13B to the glass layer 11 may be 1 : 20 to 1 : 1000. The thickness ratio of the first metal layer 13A or the second metal layer 13B to the glass layer 11 may be preferably 1 : 25 to 1 : 400, and more preferably 1 : 50 to 1 : 200. If the thickness ratio of the first metal layer 13A or the second metal layer 13B to the glass layer 11 satisfies the above-described numerical ranges, the thickness of the glass layer may be minimized, and the glass layer broken during an abnormal behavior of a battery affects an electrode to significantly improve battery safety due to an electrical short circuit.

FIGS. 2 to 3 are cross-sectional views showing a lithium secondary battery according to an embodiment of the present invention.

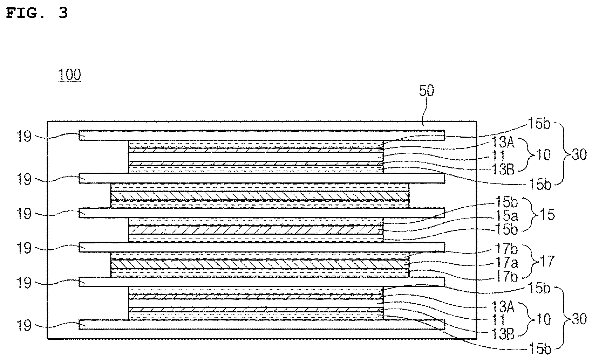

Referring to FIG. 2 and FIG. 3, a lithium secondary battery 100 according to the present invention includes an electrode assembly 50 in which a positive electrode 15, a separator 19, and a negative electrode 17 are sequentially stacked, wherein the separator 19 is disposed between the positive electrode 15 and the negative electrode 17, and the positive electrode 15 includes a positive electrode current collector 15a and a positive electrode active material layer 15b stacked on the positive electrode current collector 15a, and the negative electrode 17 includes a negative electrode current collector 17a and a negative electrode active material layer 17b stacked on the negative electrode current collector, and at least one of the positive electrode current collector and the negative electrode current collector is the electrode current collector 10 including the above-described glass layer 11.

The lithium secondary battery according to the present invention may include at least one electrode current collector 10 including the above-described glass layer 11, and preferably, may include two or more thereof. Specifically, in the electrode assembly 50 having a structure in which a plurality of electrodes and a plurality of separators are alternately stacked, an electrode 30 including the electrode current collector 10 having the above-described glass layer 11 may be disposed at the outermost periphery of the electrode assembly 50. If the above-described electrode 30 is disposed at the outermost periphery of the electrode assembly 50, the glass layer 11 crushed in the event of an abnormal behavior of the battery may exert an additional effect of penetrating a battery case for accommodating the electrode assembly 50. Accordingly, an electrolyte inside the battery case may be lost through a damaged portion of the battery case and induce an electrical short circuit, which may improve safety against thermal propagation in the event of an actual fire.

### (2) Electrode

### (2-1) Positive electrode

The positive electrode current collector may include a highly conductive metal, and is not particularly limited as long as it is not reactive in a voltage range of a battery while a positive electrode active material layer is able to be easily adhered to the positive electrode current collector. As the positive electrode current collector, for example, stainless steel, aluminum, nickel, titanium, heat treatment carbon, or aluminum or stainless steel that is surface-treated with one of carbon, nickel, titanium, silver, and the like may be used. Also, the positive electrode current collector may typically have a thickness of 3 µm to 500 µm, and microscopic irregularities may be formed on the surface of the current collector to improve the adhesive force of the positive electrode active material. For example, the positive electrode current collector may be used in various forms such as a film, a sheet, a foil, a net, a porous body, a foam, and a non-woven body.

The positive electrode active material layer may selectively include, if necessary, a conductive material and a binder together with the positive electrode active material.

At this time, the positive electrode active material may be included in a content of 80 wt% to 99 wt%, more specifically 90 wt% to 98 wt% with respect to the total weight of the positive electrode active material layer.

The conductive material is used to impart conductivity to an electrode, and any conductive material may be used without particular limitation as long as it has electron conductivity without causing a chemical change in a battery to be constituted. Specific examples thereof may include graphite such as natural graphite or artificial graphite; a carbon-based material such as carbon black, acetylene black, Ketjen black, channel black, furnace black, lamp black, thermal black, and carbon fiber; metal powder or metal fiber of such as copper, nickel, aluminum, and silver; a conductive tube such as a carbon nanotube; a conductive whisker such as a zinc oxide whisker and a potassium titanate whisker; a conductive metal oxide such as a titanium oxide; or a conductive polymer such as a polyphenylene derivative, and any one thereof or a mixture of two or more thereof may be used. The conductive material may be included in an amount of 0.01 wt% to 10 wt%, preferably 0.1 wt% to 9 wt%, and more preferably 0.1 wt% to 5 wt% based on the total weight of a positive electrode active material layer.

The binder serves to improve the bonding between positive electrode active material particles and the adhesion between the positive electrode active material and the current collector. Specific examples thereof may include polyvinylidene fluoride (PVDF), a polyvinylidene fluoride-hexafluoropropylene copolymer (PVDF-co-HFP), polyvinyl alcohol, polyacrylonitrile, polymethylmethacrylate, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene monomer (EPDM), a sulfonated EPDM, styrene-butadiene rubber (SBR), fluorine rubber, a poly acrylic acid, a polymer having the hydrogen thereof substituted with Li, Na, or Ca, or various copolymers thereof, and any one thereof or a mixture of two or more thereof may be used. The binder may be included in an amount of 1 wt% to 30 wt%, preferably 1 wt% to 20 wt%, and more preferably 1 wt% to 10 wt% based on the total weight of a positive electrode active material layer.

The positive electrode may be manufactured according to a typical method for manufacturing a positive electrode except that the positive electrode active material described above is used. Specifically, the positive electrode may be manufactured by applying a positive electrode slurry composition, which is prepared by dissolving or dispersing the positive electrode active material described above and selectively, if necessary, a binder, a conductive material, and a dispersant in a solvent, on a positive electrode current collector, followed by drying and roll-pressing.

The solvent may be a solvent commonly used in the art, and may be dimethyl sulfoxide (DMSO), isopropyl alcohol, N-methylpyrrolidone (NMP), dimethyl formamide (DMF), acetone, water, or the like, and any one thereof or a mixture of two or more thereof may be used. The amount of the solvent to be used is sufficient if the solvent dissolves or disperses the positive electrode active material, the conductive material, the binder, and the dispersant in consideration of the coating thickness of a slurry, and a manufacturing yield, and thereafter, allows the slurry to have a viscosity capable of exhibiting excellent thickness uniformity when applied for manufacturing the positive electrode.

In addition, in another method, the positive electrode may also be manufactured by casting the positive electrode slurry composition on a separate support, and then laminating a film obtained by being peeled off from the support on a positive electrode current collector.

### (2-2) Negative electrode

The negative electrode includes a negative electrode current collector and a negative electrode active material layer positioned on the negative electrode current collector.

The negative electrode current collector is not particularly limited as long as it has high conductivity without causing a chemical change in a battery, and for example, copper, stainless steel, aluminum, nickel, titanium, heat-treated carbon, copper or stainless steel that is surface-treated with one of carbon, nickel, titanium, silver, and the like, an aluminum-cadmium alloy, and the like may be used. Also, the negative electrode current collector may typically have a thickness of 3 µm to 500 µm, and as in the case of the positive electrode current collector, microscopic irregularities may be formed on the surface of the negative electrode current collector to improve the binding force of the negative electrode active material. For example, the negative electrode current collector may be used in various forms such as a film, a sheet, a foil, a net, a porous body, a foam, and a non-woven body.

The negative electrode active material layer selectively includes a binder and a conductive material in addition to the negative electrode active material.

As the negative electrode active material, a compound capable of reversible intercalation and de-intercalation of lithium may be used. Specific examples thereof may include a carbonaceous material such as artificial graphite, natural graphite, graphitized carbon fiber, and amorphous carbon; a metallic compound alloyable with lithium such as Si, Al, Sn, Pb, Zn, Bi, In, Mg, Ga, Cd, an Si alloy, an Sn alloy, or an Al alloy; a metal oxide which may be doped and undoped with lithium such as SiO_{β}(0 < β < 2), SnO₂, a vanadium oxide, and a lithium vanadium oxide; or a composite including the metallic compound and the carbonaceous material such as an Si-C composite or an Sn-C composite, and any one thereof or a mixture of two or more thereof may be used. Also, a metal lithium thin film may be used as the negative electrode active material. In addition, low crystalline carbon, high crystalline carbon, and the like may all be used as a carbon material. Representative examples of the low crystalline carbon may include soft carbon and hard carbon, and representative examples of the high crystalline carbon may include irregular, planar, flaky, spherical, or fibrous natural graphite or artificial graphite, Kish graphite, pyrolytic carbon, mesophase pitch-based carbon fiber, meso-carbon microbeads, mesophase pitches, and high-temperature heat-treated carbon such as petroleum or coal tar pitch derived cokes.

The negative electrode active material may be included in an amount of 80 wt% to 99 wt%, 82 wt% to 99 wt%, or 84 wt% to 99 wt% based on the total weight of the negative electrode active material layer.

The binder is a component for assisting in bonding between a conductive material, an active material, and a current collector, and is typically added in an amount of 0.1 wt% to 10 wt% based on the total weight of a negative electrode active material layer. Examples of the binder may include polyvinylidene fluoride (PVDF), polyvinyl alcohol, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene monomer (EPDM), a sulfonated-EPDM, styrene-butadiene rubber, nitrile-butadiene rubber, fluorine rubber, various copolymers thereof, and the like.

The conductive material is a component for further improving the conductivity of a negative electrode active material, and may be included in an amount of 1 wt% to 30 wt%, 1 wt% to 20 wt%, or 1 wt% to 10 wt% based on the total weight of the negative electrode active material layer. The conductive material is not particularly limited as long as it has conductivity without causing a chemical change in the battery, and for example, graphite such as natural graphite or artificial graphite; carbon black such as acetylene black, Ketjen black, channel black, furnace black, lamp black, and thermal black; conductive fiber such as carbon fiber and metal fiber; fluorinated carbon; metal powder such as aluminum powder and nickel powder; a conductive whisker such as zinc oxide and potassium titanate; a conductive metal oxide such as titanium oxide; and a conductive material such as a polyphenylene derivative, or the like may be used.

The negative electrode active material layer may be prepared by applying a negative electrode slurry composition, which is prepared by dissolving or dispersing a negative electrode active material and selectively, a binder and a conductive material in a solvent, on a negative electrode current collector, followed by drying, or may be prepared by casting the negative electrode slurry composition on a separate support, and then laminating a film peeled off from the support on a negative electrode current collector.

### (3) Separator

The separator is to separate the negative electrode and the positive electrode and to provide a movement path for lithium ions, and any separator may be used without particular limitation as long as it is a separator commonly used in a lithium secondary battery, and particularly, a separator having excellent moisture-retention of an electrolyte as well as low resistance to ion movement in the electrolyte is preferable. Specifically, a porous polymer film, for example, a porous polymer film manufactured using a polyolefin-based polymer such as an ethylene homopolymer, a propylene homopolymer, an ethylene/butene copolymer, an ethylene/hexene copolymer, and an ethylene/methacrylate copolymer, or a laminated structure having two or more layers thereof may be used. In addition, a typical porous non-woven fabric, for example, a non-woven fabric made of glass fiber having a high melting point, polyethylene terephthalate fiber, or the like may be used. Also, a coated separator including a ceramic component or a polymer material may be used to secure heat resistance or mechanical strength, and may selectively be used in a single-layered or multi-layered structure.

### (4) Electrolyte

The electrolyte used in the present invention may be an organic liquid electrolyte, an inorganic liquid electrolyte, a solid polymer electrolyte, a gel-type polymer electrolyte, a solid inorganic electrolyte, a molten-type inorganic electrolyte, or the like, which may be used in the manufacturing of a lithium secondary battery, but is not limited thereto.

Specifically, the electrolyte may include an organic solvent and a lithium salt.

As the organic solvent, any organic solvent may be used without particular limitation as long as it can serve as a medium through which ions involved in an electrochemical reaction of a battery may move. Specifically, as the organic solvent, an ester-based solvent such as methyl acetate, ethyl acetate, γ-butyrolactone, and ε-caprolactone; an ether-based solvent such as dibutyl ether or tetrahydrofuran; a ketone-based solvent such as cyclohexanone; an aromatic hydrocarbon-based solvent such as benzene and fluorobenzene; a carbonate-based solvent such as dimethyl carbonate (DMC), diethyl carbonate (DEC), methylethyl carbonate (MEC), ethylmethyl carbonate (EMC), ethylene carbonate (EC), and propylene carbonate (PC); an alcohol-based solvent such as ethyl alcohol and isopropyl alcohol; nitriles such as R-CN (wherein R is a linear, branched, or cyclic C2 to C20 hydrocarbon group and may include a double-bond, an aromatic ring or ether bond); amides such as dimethylformamide; dioxolanes such as 1,3-dioxolane; or sulfolanes may be used. Among the above, the carbonate-based solvent is preferred, and a mixture of a cyclic carbonate (e.g., ethylene carbonate or propylene carbonate) having high ion conductivity and a high dielectric constant, which may increase charge/discharge performance of the battery, and a low-viscosity linear carbonate-based compound (e.g., ethylmethyl carbonate, dimethyl carbonate, diethyl carbonate, or the like) is more preferred.

Any compound may be used as the lithium salt without particular limitation as long as it is a compound capable of providing lithium ions used in a lithium secondary battery. Specifically, anions of the lithium salt may be one or more selected from the group consisting of F⁻, Cl⁻, Br⁻, I⁻, NO₃⁻, N(CN)₂⁻, BF₄⁻, CF₃CF₂SO₃⁻, (CF₃SO₂)₂N⁻, (FSO₂)₂N⁻ , CF₃CF₂(CF₃)₂CO⁻, (CF₃SO₂)₂CH⁻, (SF₃)₃C⁻, (CF₃SO₂)₃C⁻, CF₃(CF₂)₇S₃⁻, CF₃CO₂⁻, CH₃CO₂⁻, SCN⁻, and (CF₃CF₂SO₂)₂N⁻, and as the lithium salt, LiPF₆, LiClO₄ LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, LiB(C₂O₄)₂, or the like may be used. The lithium salt may be used in a concentration range of 0.1 M to 4.0 M, preferably 0.5 M to 3.0 M, and more preferably 1.0 M to 2.0 M. If the concentration of the lithium salt is included in the above-described range, the electrolyte has suitable conductivity and viscosity, and thus, may exhibit excellent electrolyte performance, and lithium ions may effectively move.

In order to improve lifespan properties of a battery, suppress a decrease in battery capacity, improve discharge capacity of the battery, and the like, the electrolyte may further include one or more kinds of additives, for example, a halo-alkylene carbonate-based compound such as difluoroethylene carbonate, pyridine, triethylphosphite, triethanolamine, cyclic ether, ethylenediamine, n-glyme, hexamethyl phosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, aluminum trichloride, and the like. At this time, the additive may be included in an amount of 0.1 wt% to 10.0 wt% based on the total weight of the electrolyte.

### (5) Battery case

The lithium secondary battery according to the present invention may selectively further include a battery case for accommodating an electrode assembly composed of the positive electrode, the separator, and the negative electrode, and a sealing member for sealing the battery case.

In addition, the lithium secondary battery according to the present invention stably exhibits excellent discharge capacity, output properties, and capacity retention rate, and thus, is useful for portable devices such as mobile phones, laptop computers, and digital cameras, and in the field of electric vehicles such as hybrid electric vehicles (HEVs).

### Battery module and battery pack

Accordingly, according to another embodiment of the present invention, there are provided a battery module including the lithium secondary battery in plurality, and a battery pack including the battery module in plurality.

The battery module refers to a battery assembly which is bundled in a predetermined number and placed into a frame in order to protect the lithium secondary battery from external impacts, heat, vibration, and the like. The battery pack refers to a final form of a battery system mounted on electric vehicles, and the like.

The battery module or the battery pack may be used as a power source of one or more medium-and-large-sized devices such as a power tool, an electric car including an electric vehicle (EV), a hybrid electric vehicle (HEV), and a plug-in hybrid electric vehicle (PHEV), or a power storage system.

In addition, if the battery module and the battery pack according to the present invention include the above-described electrode current collector in plurality, safety against thermal propagation may be maximized in the event of an actual fire, so that it is possible to implement a battery with a high capacity and a large area.

Hereinafter, embodiments of the present invention will be described in detail so that those skilled in the art may easily carry out the present invention. However, the present invention may be embodied in many different forms, and is not limited to the embodiments set forth herein.

### Examples and Comparative Examples

### Example 1

A positive electrode current collector was manufactured by forming a first metal layer and a second metal layer by physical vapor deposition (PVD) of an aluminum metal to a thickness of 1 µm on both sides of a 100 µm-thick Willow glass (Corning Co., Ltd.).

### <Manufacturing of lithium secondary battery>

A positive electrode active material (NCM65 1520), a conductive material (Li-435), and a PVDF binder (KF9700, Ad-c01) were mixed at a weight ratio of 96.5 : 1.5 : 2.0 in N-methylpyrrolidone to prepare a positive electrode slurry.

The positive electrode slurry was applied on one surface of the positive electrode current collector manufactured by the above-described method, dried at 140 °C, and then roll-pressed to manufacture a positive electrode.

### Graphite was used as a negative electrode.

A separator was interposed between the positive electrode manufactured by the above-described method and the negative electrode to manufacture an electrode assembly, and the electrode assembly was positioned at the center inside a battery case, and then an electrolyte solution was injected into the case to manufacture a battery cell. The electrolyte solution was prepared by dissolving LiPF₆ with a concentration of 0.7 M in a mixed organic solvent in which ethylene carbonate (EC) : propylene carbonate (PC) : ethylmethylcarbonate (EMC) were mixed at 2 : 1 : 7 by volume.

### Example 2

### <Manufacturing of positive electrode A>

A positive electrode current collector was manufactured by forming a first metal layer and a second metal layer by physical vapor deposition (PVD) of an aluminum metal to a thickness of 1 µm on both sides of a 100 µm-thick Willow glass (Corning Co., Ltd.).

A positive electrode active material (NCM65 1520), a conductive material (Li-435), and a PVDF binder (KF9700, Ad-c01) were mixed at a weight ratio of 96.5 : 1.5 : 2.0 in N-methylpyrrolidone to prepare a positive electrode slurry.

The positive electrode slurry was applied on one surface of the positive electrode current collector manufactured by the above-described method in Example 1, dried at 140 °C, and then roll-pressed to manufacture a positive electrode A.

### <Manufacturing of positive electrode B>

A positive electrode B was manufactured in the same manner as described above, except that an aluminum current collector having a thickness of 15 µm, which is a typical metal current collector, was used as a positive electrode current collector.

### <Manufacturing of lithium secondary battery>

### Graphite was used as a negative electrode.

As shown in FIG. 3, one surface of the negative electrode 17 faces both surfaces of the positive electrode B 15, and the positive electrode A 10 faces the other surface of the negative electrode 17, and the separator 19 was interposed between the positive electrode A 10 and the negative electrode 17, and between the positive electrode B 15 and the negative electrode 17 to manufacture an electrode assembly in which the positive electrode A 10 was disposed at the outermost periphery of the electrode assembly.

The manufactured electrode assembly was positioned at the center inside a battery case, and then an electrolyte solution was injected into the case to manufacture a battery cell. The electrolyte solution was prepared by dissolving LiPF₆ with a concentration of 0.7 M in a mixed organic solvent in which ethylene carbonate (EC) : propylene carbonate (PC) : ethylmethylcarbonate (EMC) were mixed at 2 : 1 : 7 by volume.

### Comparative Example 1

A battery cell was manufactured in the same manner as in Example 1, except that an aluminum current collector having a thickness of 15 µm, which is a typical metal current collector, was used as a positive electrode current collector.

### Comparative Example 2

A battery cell was manufactured in the same manner as in Example 1, except that a positive electrode current collector including a first metal layer and a second metal layer was used by physical vapor deposition (PVD) of an aluminum metal to a thickness of 1 µm on both sides of a 6 µm-thick polyethylene terephthalate (PET) having a thickness of 6 µm.

### Experimental Example 1

The lithium secondary battery cell manufactured in each of Examples 1 and 2 and Comparative Examples 1 and 2 was tested for 1) time delay effect on thermal propagation, 2) safety against physical impact, and 3) safety against nail penetration. The results of the experiment are shown in [Table 1] below. At this time, in [Table 1], the "⊚" mark indicates very good, the "o" mark indicates good, the "△" mark indicates average, and the "X" mark indicates poor.

Specifically, methods for conducting the experiments for 1) time delay effect on thermal propagation, 2) safety against physical impact, and 3) safety against nail penetration are as follows.
1) Five of the battery cells manufactured above were set to one module, and heat was applied to one battery cell at a rate of 0.5 °C/sec using a heating pad. The heat to adjacent cells was measured by using a thermocouple to evaluate a time delay effect on thermal propagation.
2) The battery cell manufactured above was fully charged to 4.4 V at 0.2 C in CC/CV mode, and a method in which a rod having a diameter of 15.8 mm was freely dropped from a height of 610 mm to a central portion of the battery cell was used to measure whether the battery cell was ignited, thereby evaluating mechanical safety of each battery cell.
3) The battery cell manufactured above was penetrated at a rate of 0.1 mm/s using a sharp nail type to perform a nail penetration experiment, thereby evaluating the mechanical safety of each battery cell.

**[Table 1]**

| | 1) Time delay effect on thermal propagation | 2) Safety from physical impact | 3) Safety from nail penetration |
|---|---|---|---|
| Example 1 | ○ | ○ | ○ |
| Example 2 | ⊚ | ⊚ | ⊚ |
| Comparative Example 1 | X | △ | X |
| Comparative Example 2 | △ | ○ | ○ |

From [Table 1] above, it can be confirmed that the battery cells manufactured in Examples 1 and 2 are superior to the battery cells manufactured in Comparative Examples 1 and 2, respectively, in terms of 1) time delay effect on thermal propagation, 2) safety against physical impact, and 3) safety against nail penetration. Since Examples 1 and 2 included a positive electrode including a positive electrode current collector having a glass layer (Willow glass), in the event of an abnormal behavior of the battery due to an external heat source, a physical impact, or nail penetration, the glass layer was broken, thereby damaging metal layers disposed on both surfaces of the glass layer, resulting in inducing an electrical short between electrodes, so that 1) time delay effect on thermal propagation, 2) safety against physical impact, and 3) safety against nail penetration were improved.

Particularly, Example 2 is a case in which a positive electrode (Positive electrode A) including a positive electrode current collector having a glass layer (Willow Glass) is disposed at the outermost periphery of an electrode assembly, wherein the positive electrode current collector having the glass layer (Willow Glass) is positioned on both surfaces of the outermost periphery of the electrode assembly, so that the time delay effect on thermal propagation is more excellent, and also, the positive electrode current collector crushed due to a physical impact and nail penetration penetrates a battery case, thereby allowing an electrolyte solution to be discharged to the outside of the battery case, so that the safety is more excellent.

### [Description of the Reference Numerals or Symbols]

10: Electrode current collector including glass layer
11: Glass layer
13A, 13B: First metal layer, second metal layer
15: Positive electrode
15a: Positive electrode current collector
15b: Positive electrode active material layer
17: Negative electrode
17a: Negative electrode current collector
17b: Negative electrode active material layer
19: Separator
30: Electrode including electrode current collector including glass layer
50: Electrode assembly
100: Lithium secondary battery

## Claims

1. A lithium secondary battery comprising:
an electrode assembly having a structure in which a plurality of electrodes and a plurality of separators are alternately stacked; and
a battery case for accommodating the electrode assembly, wherein:
the electrode includes an electrode current collector and an electrode active material layer disposed on the electrode current collector; and
at least one of the pluralities of electrode current collectors is an electrode current collector including a glass layer, a first metal layer disposed on one surface of the glass layer, and a second metal layer disposed on the other surface of the glass layer.

2. The lithium secondary battery of claim 1, wherein the glass layer has a thickness of 200 µm or less.

3. The lithium secondary battery of claim 1, wherein the first metal layer and the second metal layer each independently have a thickness of 0.2 µm to 5.0 µm.

4. The lithium secondary battery of claim 1, wherein the thickness ratio of the first metal layer or the second metal layer to the glass layer is 1 : 20 to 1 : 1000.

5. The lithium secondary battery of claim 1, wherein the first metal layer and the second metal layer each independently comprise one or more selected from the group consisting of copper, aluminum, stainless steel, and nickel.

6. The lithium secondary battery of claim 1, wherein an electrode including the electrode current collector having the glass layer is disposed at the outermost periphery of the electrode assembly.

7. A battery module comprising the lithium secondary battery described in claim 1 in plurality.

8. A battery pack comprising the battery module described in claim 7 in plurality.
